# EUROPEAN PATENT SPECIFICATION

(11) **EP 3 690 564 B1**
(45) Date of publication and mention of the grant of the patent: **05.04.2023**
(21) Application number: 19155024.3
(22) Date of filing: 01.02.2019
(51) Int. Cl.: G05B 19/042

(54) **LOCALITY CHECK FOR ACCESS CONTROL TO AN INDUSTRIAL DEVICE**
ORTSÜBERPRÜFUNG ZUR ZUGANGSKONTROLLE ZU EINER INDUSTRIEVORRICHTUNG
VÉRIFICATION DE LA LOCALISATION POUR LE CONTRÔLE D'ACCÈS À UN DISPOSITIF INDUSTRIEL

(43) Date of publication of application: 05.08.2020
(73) Proprietor: ABB Schweiz AG, 5400 Baden (CH)
(72) Inventor: Kolb, Emanuel, 69517 Gorxheimertal (DE)
(74) Representative: Maiwald GmbH

(56) References cited:
- WO-A1-2017/064107
- WO-A2-2013/050738
- US-A1- 2018 014 480

## Description

### FIELD OF THE INVENTION

The invention relates to the field of determining a locality of a user device for an access control of the user device by an access system. Particularly, the invention relates to a method to determine the locality of the user device for accessing an industrial device and/or a physical device identification and inspection. Furthermore, the invention relates to a communication system, a program element, and a computer readable medium.

### BACKGROUND OF THE INVENTION

Mobile devices and applications may be configured to allow controlling devices in an industrial plant potentially from anywhere. For at least some accesses to the industrial plant, it may be required for a person - i.e. for the user of a user device - to be physically present, i.e. residing close to the location of the industrial device. Since typical wireless communication systems via WLAN (Wireless Local Area Network), and/or GSM (Global System for Mobile Communications) and/or similar systems can connect from anywhere, there is a risk, for instance, that the person connects the user device to an incorrect industrial device, thus performing actions on the wrong industrial device. This may, e.g., cause unintentional damage.

Document WO 2017 064 107 A1 describes a so-called "LTN-softbadge system", wherein LTN is a type of networks called "Low Throughput Networks (LTN)" and softbadge is a device, which controls an access to an access-controlled door. Document WO 2013 050 738 A2 describes a method for secure user access and/or authentication to a remote service, e.g. for a voice call or to a local service.

Document US 2018 / 0 014 480 A1 describes irrigation systems and irrigation controllers, wherein a communication may be performed via an access point.

### DESCRIPTION OF THE INVENTION

It is therefore an objective of the invention to make sure that a user device has the same or a similar locality as an industrial device, which the user device wants to access. This objective is achieved by a method and/or and an apparatus according to the independent claims. Further embodiments are evident from the dependent patent claims and the following description.

According to a first aspect, a method for determining a locality of a user device for an access control of the user device to an industrial device, by using an access system, comprises defined in claim 1.

The locality of the user device may be considered with reference to the industrial device. This means that the user device needs to check if it is located nearby the industrial device, i.e. close to the industrial device and/or in a distance where the user is able to sense at least some operations of the industrial device directly. The user device may be, e.g., a tablet, a smartphone, a special control device or similar devices that are configured to communicate wirelessly, and/or an application running on at least one of these devices. The industrial device may be, e.g., a plant, an automation system, a vehicle, a tool, and/or similar machines, and/or a part of these, whereas the industrial device can be steered and/or controlled remotely. The device that receives the passcode and transmits it to the user device may be different from the industrial device, but connected to and/or attached or otherwise collocated with the industrial device, e.g. by being mounted in the same cabinet as the industrial device. The access system may be a system that is configured to control the industrial device, i.e. at least some of its operations. The access system may be a so-called Distributed Control System (DCS) or a part of it. The access system may be connected to the industrial device by a wire and/or a - wired and/or wireless - communication system. This connection may be secured.

Sending the request for an access to the industrial device may comprise a predefined command sent by the user device to the access system. At least some systems may require an authorization sequence - e.g. a login, a passcode, and/or other means - to register to the access system, before the user device is enabled to send this predefined command.

Generating the passcode by the access system comprises generating a random number of a predefined length.

Sending the passcode from the access system to the industrial device may be via a secured or a not-secured path. The sending may include some encrypting of the passcode. The sending may include an acknowledge mechanism.

The industrial device, then, communicates the passcode to the user device. This commu-nication may comprise an "active" sending of the passcode to the user device and/or a "passive" scanning of the passcode by the user device. The communicating uses one or more local communication techniques. The communication techniques may comprise the use of electrical, electromagnetical, optical, and/or acoustical means. The communication may be performed wired or wirelessly. The local communication techniques may comprise non-local communication techniques such as WLAN and/or GSM (including successor-systems), combined with a localisation technique, e.g. GPS. Sending the passcode from the user device to the access system may be performed via the wireless means the user device is configured to use. Sending the passcode may include some encrypting.

The access system grants the access to the industrial device for the user device, when the passcode is essentially the same as the passcode generated by the access system. The passcode may be the same as generated by the access system. The passcode may comprise some deviations, whereas the passcode is still considered to be essentially the same. Examples comprise, e.g., deviations caused by encryption and/or redundancy mechanisms applied to the passcode, for instance applying CRC (Cyclic Redundancy Check) and/or AES (Advanced Encryption Standard), 3DES (Triple Data Encryption Standard), or others. Otherwise, i.e. in cases when the passcode differs, the access system denies the access to the industrial device for the user device.

This method may provide for securing the locality of the user device with reference to the industrial device, i.e. both devices have, when executing this method, the same or a similar locality. This is advantageous, because the access to the industrial device avoids or reduces confusing industrial devices, particularly in environments where several machines of the same type are operating. Furthermore, the method provides an increased security level, because it avoids "remote hacking" of industrial devices. The security level may easily be further increased, e.g. by means like encryption and/or means of mechanical access control to spaces where industrial devices are located. The method may be run once or several times before and/or when operating the industrial device.

The local communication technique may comprise a communication via an electric contact between the user device and the industrial device. This is particularly advantageous for devices that require - e.g. due to high-security and/or high-safety requirements - a direct contact, at least once, e.g. when starting a distinct operation.

The local communication technique may comprise an acoustical communication technique between the user device and the industrial device. The acoustical signal may be human-sensible or an ultrasound or a combination of them. The acoustical signal may be speech. For instance, the industrial device could utter the passcode.

In an embodiment, the acoustical communication technique comprises sending a predefined pattern. The acoustical signal may comprise a melody, for instance in combination with a hidden pattern, e.g. with an ultrasound signal. This may be used in a way where the ultrasound signal secretly secures the hearable signal, and raises an alarm when only the hearable signal is sent.

The local communication technique may comprise an optical communication technique between the user device and the industrial device. The optical communication may comprise to display a number, a barcode, a QR code, which can be scanned by the user device. The number, barcode, QR code, etc. is configured to be changed dynamically. The displaying may comprise, e.g., using an LCD-display or an e-paper display, where these encodings are displayed on. This display may be placed on or close to the industrial device. The optical communication may comprise to send a light pulse, by a flash, a laser, an LED, or by Li-Fi technology (Li-Fi: light fidelity) to the user device. This may be particularly advantageous for systems that are cost-sensitive and may receive the light pulse by a simple photo-diode or similar means. This is also useful for existing field devices, that have no display but LEDs

The local communication technique may comprise an electrical and/or electromagnetical near-field technique between the user device and the industrial device. The signal may be communicated electromagnetically, for instance by RFID, by NFC protocol, or other standardized or proprietary protocols.

The local communication technique may comprise an electrical and/or electrical short-range communication technique between the user device and the industrial device. This may comprise as communication via Bluetooth, Wireless USB, and/or proprietary protocols.

The local communication technique may comprise a wireless technique between the user device and the industrial device, combined with a localization technique for both the user device and the industrial device. The wireless technique may comprise cellular wide-range techniques like GPRS, UMTS and/or LTE. The wireless technique may comprise arbitrary WLAN-protocols. The localization technique may comprise navigation systems such as GPS, Galileo or the like, possibly combined with one or more accuracy-enhancing mechanisms.

In an embodiment, the method further comprises the step of asking the user device, by the access system, for entering the passcode. This may be performed essentially parallel to the sending of the passcode from the access system to the industrial device. In an implementation on a tablet or smartphone, this may include to send the user device a message like "Please scan the industrial device DEV_NAME for access." This may also include to send the user device a message like "Sending this code to the access system ACS_SY? (yes/no)", after having received the passcode. Performing these methods may improve the user-experience.

A further aspect comprises a communication system as defined in claim 6.

A further aspect comprises a user device as defined in claim 4.

A further aspect comprises an access system as defined in claim 5.

A further aspect, which is not part of the invention, comprises an industrial device configured to
- receiving a passcode, generated by the access system, from an access system;
- sending the passcode to a user device, via a local communication technique.

A further aspect, which is not part of the invention, comprises a program element for executing the method as described above and/or below, when running the program element on a communication system, which comprises a user device, an access system, and an industrial device.

A further aspect, which is not part of the invention, comprises a computer readable medium, where the program element as described above is stored on.

A further aspect comprises the use of a system as described above and/or below for a physical device identification and inspection. An example workflow may comprise:
- a user, with a user device connected to an access system as described above and/or below, accesses physically an industrial device (e.g. the person goes to it);
- the user selects the industrial device on the user device (e.g. by an app running on the user device) and asks for identification, e.g. via its WLAN and/or cellular communication;
- the access system receives the request from the user device, generates a passcode, and triggers the device to flash some LEDs (or similar devices; see above);
- the user confirms the industrial device, which is located close to this person, e.g. "in front of this person";
- by using a locality method according to aspect, the user makes sure that the industrial device "in front of this person" is, indeed, the industrial device that is to be accessed;
- then, a communication, e.g. a data exchange, with this correct industrial device can be performed.

Note that, without the locality method as elaborated above and/or below, the person has no guarantee to access the correct industrial device, i.e. the one "in front of this person". When using this invention, it is assured that the user device is in the same location as the industrial device. Additionally, the user may confirm the correctness of the industrial device to be accessed. The conformation may comprise to click on a checkbox or similar; this may be done remotely.

The disclosure also relates to a computer program product including computer program code for controlling one or more processors of a device adapted to be connected to a communication network and/or configured to store a standardized configuration represent-tation, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, in which:
**Fig. 1** schematically shows a communication system according to an embodiment;
**Fig. 2** shows a message sequence chart according to an embodiment;
**Fig. 3** shows a flow diagram according to an embodiment;
**Fig. 4** shows schematically a further diagram according to an embodiment;
**Fig. 5** shows schematically a further diagram according to an embodiment.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

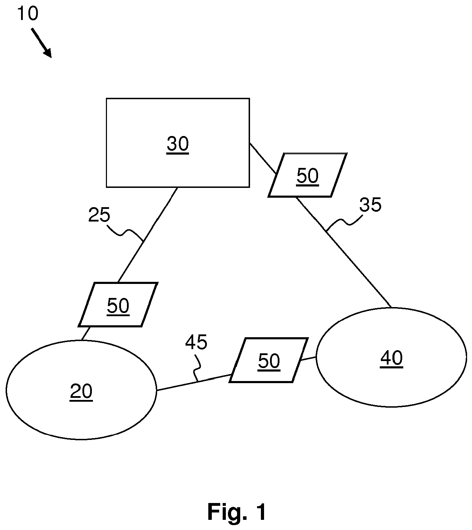

**Fig. 1** schematically shows a communication system 10 according to an embodiment. The communication system 10 comprises a user device 20, an access system 30, and an industrial device 40. The user device 20 may be, e.g., a tablet, a smartphone, a special control device or similar devices that are configured to communicate wirelessly, and/or an application running on at least one of these devices. The industrial device 40 may be, e.g., a plant, an automation system, a vehicle, a tool, and/or similar machines, and/or a part of these, whereas the industrial device 40 can be steered and/or controlled remotely. The access system 30 may be a system that is configured to control the industrial device, i.e. at least some of its operations. The access system may be a so-called Distributed Control System (DCS) or a part of it.

The communication path 25 between the user device 20 and the access system 30 may comprise local and/or non-local communication techniques such as WLAN and/or GSM or successor-systems. In some embodiments, the communication path 25 may be a wired one, e.g. a legacy-phone connection or a cable configured to for serial communication. The communication path 35 between the access system 30 and the industrial device 40 may comprise wired or wireless means. In some embodiments, the access system 30 and the industrial device 40 may be located in the same housing and/or the same room. The communication path 45 between the industrial device 40 and the user device 20 is realized by a local communication technique, e.g. by electrical, electromagnetical, optical, and/or acoustical means. A passcode 50 uses communication paths 25, 35, and 45 as described above and/or below.

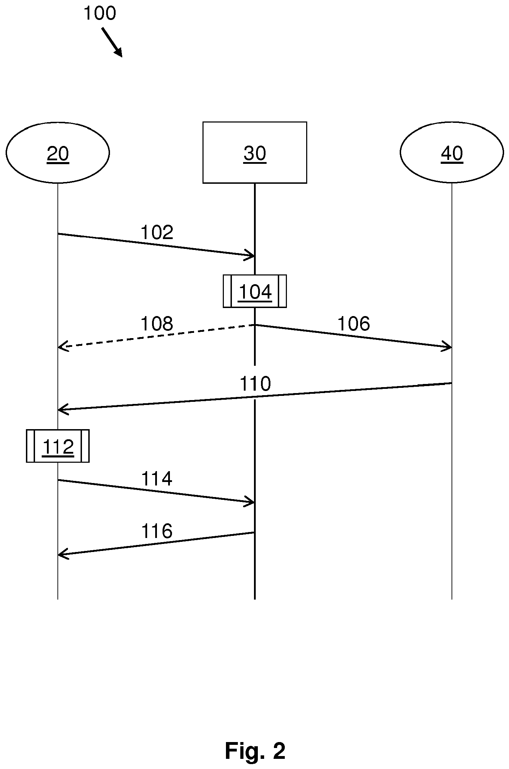

**Fig. 2** shows a message sequence chart 100 according to an embodiment. The message sequence chart 100 sketches schematically a communication between the user device 20, the access system 30, and the industrial device 40 of a communication system 10 (see **Fig. 1** for these devices) according to an embodiment. In a step 102, the user device 20 sends a request for an access to the industrial device 40 to the access system 30. The access system 30 may require authentication, before the user device 20 is allowed the send this request for the access to the industrial device 40. In a step 104, the access system 30 generates a passcode 50, e.g. by using a random process. In a step 106, the access system 30 sends the passcode 50 to the industrial device 40. This sending may include an encryption. In an (optional) step 108, the access system 30 asks the user device 20 for scanning and/or entering the passcode 50. This may be done essentially parallel to the step 106 (e.g. right before or right after the step 106). If there is a longer time period between the step 106 and the step 108, the user experience may suffer, due to this. In a step 110, the user device 20 and the industrial device 40 communicate the passcode 50, by using a local communication technique 45. Communicating the passcode 50 may comprise an "active" sending the passcode 50 to the user device 20 and/or a "passive" scanning of the passcode 50 by the user device 20. In a step 112, a person that uses the user device 20 may perform an action, e.g. pushing a "forward"-button on the user device 20 to initiate a sending of the passcode 50 to the access system 30. Alternatively, the user device 20 may initiate the step 112 automatically. In a step 114, the user device 20 sends the passcode 50 to the access system 30. In a step 116, the access system 30 grants the access of the user device 20 to the industrial device 40, when the passcode 50 is essentially the same as the passcode 50 generated by the access system 30. If the passcode 50 differs, the access system 30 denies the access to the industrial device 40.

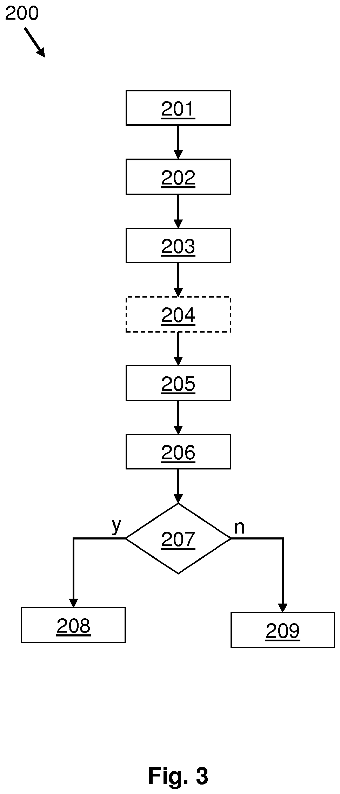

**Fig. 3** shows a flow diagram 200 according to an embodiment. The message flow diagram 200 sketches schematically a method according to an embodiment. In a step 201, the user device 20 sends a request to the access system 30, namely for an access to the industrial device 40. The access system 30 may require authentication, before the user device 20 is allowed the send this request. In a step 202, the access system 30 generates a passcode 50, e.g. by using a random process. In a step 203, the access system 30 sends the passcode 50 to the industrial device 40. In a step 204, the access system 30 asks the user device 20 for entering the passcode 50. In a variation, the step 204 may be executed before the step 203. In a variation, the step 204 may be left out; therefore, the step 204 is depicted with broken lines. In a step 205, the user device 20 and the industrial device 40 commu-nicate the passcode 50, by using a local communication technique 45. Communicating the passcode 50 may comprise an "active" sending the passcode 50 to the user device 20 and/or a "passive" scanning of the passcode 50 by the user device 20. In a step 206, a person that uses the user device 20 may perform an action, e.g. pushing a "forward"-button on the user device 20 to initiate a sending of the passcode 50 from to the user device 20 to the access system 30, or the user device 20 initiates this sending automatically after the step 205. The step 206 includes this sending. In a step 207, the access system 30 receives and evaluates the passcode 50. When the passcode 50 is essentially the same as the passcode 50 generated by the access system 30 (in the step 202), the access system 30 grants, in a step 208, the access of the user device 20 to the industrial device 40. If the passcode 50 differs, the access system 30 denies the access to the industrial device 40, in a step 209.

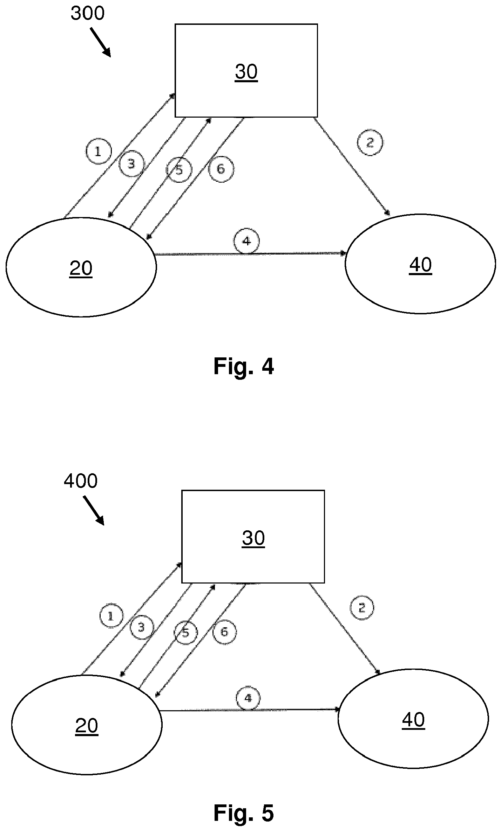

**Fig. 4** shows schematically a further diagram 300 according to an embodiment, where a display on the user device 20 is available. In a step 1, the user device 20 asks for access to the industrial device 40. In a step 2, the access system 30 sends the passcode 50, and the industrial device 40 shows the passcode 50 on its display. In a step 3, the user device 20 asks the user to enter passcode 50. In a step 4, the user reads and enters (by using the user device 20) the passcode 50 from the industrial device 40 into the user device 20. Alternatively, the user scans the passcode 50 with a camera, which is connected to the user device 20. In a step 5, the passcode 50 is sent to the access system 30. In a step 6, the access system 30 compares the input, which has been sent from the user device 20, and gives or denies the access, depending on the result of the comparison.

**Fig. 5** shows schematically a further diagram 400 according to an embodiment, where a LED or a similar apparatus is available on the user device 20. The steps are named analogously to **Fig. 4****.** In a step 1, the user device 20 asks for access to the industrial device 40. In a step 2, the access system 30 sends the passcode 50, and the industrial device 40 shows the passcode 50 as a blinking LED-signal, e.g. coded by a Morse code. In a step 3, the user device 20 asks the user to direct a camera of user device 20 towards the blinking LED-signal. In a step 4, the user device 20, respectively an application on the user device 20, captures and decodes the LED-signal sent by the industrial device 40. In a step 5, the passcode 50 is sent to the access system 30 by the user device 20, respectively by the appli-cation. In a step 6, the access system 30 compares the input, which has been sent from the user device 20, and gives or denies the access, depending on the result of the comparison.

The functional modules and/or the configuration mechanisms may be implemented as programmed software modules or procedures, respectively; however, one skilled in the art will understand that the functional modules and/or the configuration mechanisms may be implemented fully or partially in hardware.

### LIST OF REFERENCE SYMBOLS

- 1-6: steps of diagram 300 or 400
- 10: communication system
- 20: user device
- 25: communication path
- 30: access system
- 35: communication path
- 40: industrial device
- 45: communication path, communication technique
- 50: passcode
- 100: message sequence chart
- 102 - 116: steps of the message sequence chart
- 200: flow diagram
- 201 - 209: steps of the flow diagram
- 300: diagram
- 400: diagram

## Claims

1. A method for determining a locality of a user device (20) for an access control of the user device (20) to an industrial device (40), wherein the locality of the user device (20) to an industrial device (40) comprises to check if the user device (20) is located nearby the industrial device (40), the method comprising the steps of:
- sending, by the user device (20), a request for an access to the industrial device (40) to an access system (30);
- generating a passcode (50) by the access system (30), wherein the passcode is a random number of a predefined length;
- sending the passcode (50) from the access system (30) to the industrial device (40);
- communicating the passcode (50) from the industrial device (40) to the user device (20) via a local communication technique (45), wherein the local communication technique (45) comprises at least one of:
a communication via an electric contact between the user device (20) and the industrial device (40),
an acoustical communication technique between the user device (20) and the industrial device (40),
an optical communication technique between the user device (20) and the industrial device (40),
an electrical and/or electromagnetical near-field technique between the user device (20) and the industrial device (40),
an electrical short-range communication technique between the user device (20) and the industrial device (40), and/or
a wireless technique between the user device (20) and the industrial device (40), combined with a localization technique for both the user device (20) and the industrial device (40);
- sending the passcode (50) from the user device (20) to the access system (30); and
- granting the access to the industrial device (40) by the access system (30), when the passcode (50) received from the user device (20) is essentially the same as the passcode (50) generated by the access system (30), wherein essentially the same passcode (50) is the identical passcode or comprising deviations caused by encryption and/or redundancy mechanisms.

2. The method of claim 1,
wherein the acoustical communication technique comprises sending a predefined pattern.

3. The method of any one of the preceding claims, further comprising the step of:
- asking the user device (20), by the access system (30), for entering the passcode (50), essentially parallel to the sending of the passcode (50) from the access system (30) to the industrial device (40), wherein asking (108) the user device (20) essentially parallel comprises asking within a time period spanning from the sending (106) of the passcode (50) to the industrial device (40) and a step (110), the user device (20) and the industrial device (40) communicate the passcode (50), by using a local communication technique (45).

4. A user device (20) configured to
- send a request for an access to an industrial device (40) to an access system (30);
- receive a passcode (50), generated by the access system (30), via a local communication technique (45) from the industrial device (40), wherein the passcode is a random number of a predefined length, wherein the local communication technique (45) comprises at least one of:
a communication via an electric contact, an acoustical communication technique, an acoustical communication technique, an electrical and/or electromagnetical near-field technique, an electrical short-range communication technique between the user device (20) and the industrial device (40), and/or a wireless technique combined with a localization technique for both the user device (20) and the industrial device (40);
- send the passcode (50) to the access system (30);
- receive, from the access system (30), the access to the industrial device (40).

5. An access system (30) configured to
- receive, from a user device (20), a request for an access to an industrial device (40);
- generate a passcode (50), wherein the passcode is a random number of a predefined length;
- send the passcode (50) to the industrial device (40);
- receive, from the user device (20), the passcode (50), which has been sent via a local communication technique (45) from the industrial device (40) to the user device (20), wherein the local communication technique (45) comprises at least one of:
a communication via an electric contact, an acoustical communication technique, an acoustical communication technique, an electrical and/or electromagnetical near-field technique, an electrical short-range communication technique between the user device (20) and the industrial device (40), and/or a wireless technique combined with a localization technique for both the user device (20) and the industrial device (40);
- grant the access to the industrial device (40) by the access system (30), when the passcode (50) is essentially the same as the passcode (50) generated by the access system (30), wherein essentially the same passcode (50) is the identical passcode or comprising deviations caused by encryption and/or redundancy mechanisms.

6. A communication system (10), comprising a user device (20) according to claim 4, an access system (30) according to claim 5, and an industrial device (40), the communication system (10) configured to execute a method of any one of the claims 1 - 3,
wherein the industrial device (40) is configured for:
- receiving a passcode (50), generated by the access system (30), from the access system (30), wherein the passcode is a random number of a predefined length; and
- sending the passcode (50) to the user device (20), via a local communication technique (45).

## Patentansprüche

1. Verfahren zum Bestimmen einer Lokalität einer Benutzervorrichtung (20) zur Zugangskontrolle der Benutzervorrichtung (20) zu einer industriellen Vorrichtung (40), wobei die Lokalität der Benutzervorrichtung (20) zu einer industriellen Vorrichtung (40) umfasst, zu prüfen, ob die Benutzervorrichtung (20) sich in der Nähe der industriellen Vorrichtung (40) befindet, wobei das Verfahren die folgenden Schritte umfasst:
- Senden, durch die Benutzervorrichtung (20), einer Anfrage für einen Zugang zu der industriellen Vorrichtung (40) an ein Zugangssystem (30);
- Erzeugen eines Passcodes (50) durch das Zugangssystem (30), wobei der Passcode eine Zufallszahl mit einer vordefinierten Länge ist;
- Senden des Passcodes (50) von dem Zugangssystem (30) an das Industriegerät (40);
- Übermitteln des Passcodes (50) von der industriellen Vorrichtung (40) an die Benutzervorrichtung (20) über eine lokale Kommunikationstechnik (45), wobei die lokale Kommunikationstechnik (45) mindestens eines der folgenden umfasst:
eine Kommunikation über einen elektrischen Kontakt zwischen dem Benutzergerät (20) und dem Industriegerät (40),
eine akustische Kommunikationstechnik zwischen dem Benutzergerät (20) und dem Industriegerät (40),
eine optische Kommunikationstechnik zwischen dem Benutzergerät (20) und dem Industriegerät (40),
eine elektrische und/oder elektromagnetische Nahfeldtechnik zwischen dem Benutzergerät (20) und dem Industriegerät (40),
eine elektrische Kurzstrecken-Kommunikationstechnik zwischen dem Benutzergerät (20) und dem Industriegerät (40) und/oder eine drahtlose Technik zwischen dem Benutzergerät (20) und dem Industriegerät (40), kombiniert mit einer Lokalisierungstechnik sowohl für das Benutzergerät (20) als auch für das Industriegerät (40);
- Senden des Passcodes (50) von der Benutzervorrichtung (20) an das Zugangssystem (30); und
- Gewährung des Zugriffs auf die industrielle Vorrichtung (40) durch das Zugriffssystem (30), wenn der von der Benutzervorrichtung (20) empfangene Passcode (50) im Wesentlichen derselbe ist wie der von dem Zugriffssystem (30) erzeugte Passcode (50), wobei der im Wesentlichen gleiche Passcode (50) der identische Passcode ist oder Abweichungen umfasst, die durch Verschlüsselungs- und/oder Redundanzmechanismen verursacht werden.

2. Verfahren nach Anspruch 1,
wobei die akustische Kommunikationstechnik das Senden eines vordefinierten Musters umfasst.

3. Verfahren nach einem der vorhergehenden Ansprüche, das ferner den folgenden Schritt umfasst:
- Auffordern der Benutzervorrichtung (20) durch das Zugangssystem (30) zur Eingabe des Passcodes (50), im Wesentlichen parallel zum Senden des Passcodes (50) vom Zugangssystem (30) an die Industrievorrichtung (40), wobei das im Wesentlichen parallele Auffordern (108) der Benutzervorrichtung (20) das Auffordern innerhalb einer Zeitspanne umfasst, die sich zwischen dem Senden (106) des Passcodes (50) an die Industrievorrichtung (40) und einem Schritt (110) erstreckt, bei dem die Benutzervorrichtung (20) und die Industrievorrichtung (40) den Passcode (50) unter Verwendung einer lokalen Kommunikationstechnik (45) kommunizieren.

4. Ein Benutzergerät (20), das dazu eingerichtet ist,
- senden einer Anfrage für einen Zugang zu einer industriellen Vorrichtung (40) an ein Zugangssystem (30);
- empfangen eines Passcodes (50), der von dem Zugangssystem (30) erzeugt ist, über eine lokale Kommunikationstechnik (45) von der industriellen Vorrichtung (40), wobei der Passcode eine Zufallszahl mit einer vordefinierten Länge ist, wobei die lokale Kommunikationstechnik (45) mindestens eines der folgenden umfasst:
einer Kommunikation über einen elektrischen Kontakt, einer akustischen Kommunikationstechnik, einer akustischen Kommunikationstechnik, einer elektrischen und/oder elektromagnetischen Nahfeldtechnik, einer elektrischen Nahbereichskommunikationstechnik zwischen dem Benutzergerät (20) und dem Industriegerät (40), und/oder einer drahtlosen Technik kombiniert mit einer Lokalisierungstechnik sowohl für das Benutzergerät (20) als auch für das Industriegerät (40);
- senden des Passcodes (50) an das Zugangssystem (30);
- empfangen, von dem Zugangssystem (30), den Zugang zu dem Industriegerät (40).

5. Zugangssystem (30), das dazu eingerichtet ist,
- von einer Benutzervorrichtung (20), eine Anfrage für einen Zugang zu einer industriellen Vorrichtung (40) zu empfangen;
- einen Passcode (50) zu erzeugen, wobei der Passcode eine Zufallszahl mit einer vordefinierten Länge ist;
- den Passcode (50) an die industrielle Vorrichtung (40) zu senden;
- den Passcode (50), von der Benutzervorrichtung (20), zu empfangen, der über eine lokale Kommunikationstechnik (45) von der Industrievorrichtung (40) an die Benutzervorrichtung (20) gesendet wurde, wobei die lokale Kommunikationstechnik (45) mindestens eines der folgenden Verfahren umfasst:
eine Kommunikation über einen elektrischen Kontakt, eine akustische Kommunikationstechnik, eine akustische Kommunikationstechnik, eine elektrische und/oder elektromagnetische Nahfeldtechnik, eine elektrische Nahbereichskommunikationstechnik zwischen dem Benutzergerät (20) und dem Industriegerät (40), und/oder eine drahtlose Technik kombiniert mit einer Lokalisierungstechnik sowohl für das Benutzergerät (20) als auch für das Industriegerät (40);
- den Zugriff auf die industrielle Vorrichtung (40) durch das Zugriffssystem (30) zu gewähren, wenn der Passcode (50) im Wesentlichen derselbe ist wie der vom Zugriffssystem (30) erzeugte Passcode (50), wobei der im Wesentlichen gleiche Passcode (50) der identische Passcode ist oder Abweichungen umfasst, die durch Verschlüsselungs- und/oder Redundanzmechanismen verursacht werden.

6. Kommunikationssystem (10), umfassend ein Benutzergerät (20) nach Anspruch 4, ein Zugangssystem (30) nach Anspruch 5 und ein Industriegerät (40), wobei das Kommunikationssystem (10) dazu eingerichtet ist, ein Verfahren nach einem der Ansprüche 1 bis 3 auszuführen,
wobei das Industriegerät (40) dazu eingerichtet ist,
- Empfangen einen Passcode (50) zu empfangen, der von dem Zugangssystem (30) erzeugt wurde, von dem Zugangssystem (30), wobei der Passcode eine Zufallszahl mit einer vordefinierten Länge ist; und
- den Passcode (50) an das Benutzergerät (20) über eine lokale Kommunikationstechnik (45) zu senden.

## Revendications

1. Procédé de détermination d'une localité d'un dispositif utilisateur (20) pour un contrôle d'accès du dispositif utilisateur (20) à un dispositif industriel (40), la localité du dispositif utilisateur (20) par rapport à un dispositif industriel (40) comprenant la vérification du fait que le dispositif utilisateur (20) est ou non situé à proximité du dispositif industriel (40), le procédé comprenant les étapes de :
- envoi, par le dispositif utilisateur (20), à un système d'accès (30), d'une demande d'accès au dispositif industriel (40) ;
- génération d'un code d'accès (50) par le système d'accès (30), le code d'accès étant un nombre aléatoire d'une longueur prédéfinie ;
- envoi du code d'accès (50) par le système d'accès (30) au dispositif industriel (40) ;
- communication du code d'accès (50) par le dispositif industriel (40) au dispositif utilisateur (20) via une technique de communication locale (45), la technique de communication locale (45) comprenant au moins l'une de :
une communication via un contact électrique entre le dispositif utilisateur (20) et le dispositif industriel (40),
une technique de communication acoustique entre le dispositif utilisateur (20) et le dispositif industriel (40),
une technique de communication optique entre le dispositif utilisateur (20) et le dispositif industriel (40),
une technique électrique et/ou électromagnétique en champ proche entre le dispositif utilisateur (20) et le dispositif industriel (40),
une technique de communication électrique à courte portée entre le dispositif utilisateur (20) et le dispositif industriel (40), et/ou
une technique sans fil entre le dispositif utilisateur (20) et le dispositif industriel (40), combinée à une technique de localisation pour les deux dispositif utilisateur (20) et dispositif industriel (40) ;
- envoi du code d'accès (50) par le dispositif utilisateur (20) au système d'accès (30) ; et
- l'autorisation d'accès au dispositif industriel (40) par le système d'accès (30), lorsque le code d'accès (50) reçu en provenance du dispositif utilisateur (20) est essentiellement identique au code d'accès (50) généré par le système d'accès (30), essentiellement identique au code d'accès (50) signifiant le même code d'accès ou comprenant des variations causées par des mécanismes de chiffrement et/ou de redondance.

2. Procédé selon la revendication 1,
dans lequel la technique de communication acoustique comprend l'envoi d'un motif prédéfini.

3. Procédé selon l'une quelconque des revendications précédentes, comprenant en outre l'étape de :
- demande au dispositif utilisateur (20), par le système d'accès (30), d'entrer le code d'accès (50), essentiellement en parallèle à l'envoi du code d'accès (50) par le système d'accès (30) au dispositif industriel (40), la demande (108) au dispositif utilisateur (20) essentiellement en parallèle comprenant la demande dans un laps de temps s'étendant entre l'envoi (106) du code d'accès (50) au dispositif industriel (40) et une étape (110), le dispositif utilisateur (20) et le dispositif industriel (40) se communiquant le code d'accès (50), à l'aide d'une technique de communication locale (45).

4. Dispositif utilisateur (20) configuré pour
- envoyer à un système d'accès (30) une demande d'accès au dispositif industriel (40) ;
- recevoir un code d'accès (50), généré par le système d'accès (30), via une technique de communication locale (45) en provenance du dispositif industriel (40), le code d'accès étant un nombre aléatoire d'une longueur prédéfinie, la technique de communication locale (45) comprenant au moins l'une de :
une communication via un contact électrique, une technique de communication acoustique, une technique de communication acoustique, une technique électrique et/ou électromagnétique en champ proche, une technique de communication électrique à courte portée entre le dispositif utilisateur (20) et le dispositif industriel (40), et/ou une technique sans fil combinée à une technique de localisation pour le dispositif utilisateur (20) ainsi que pour le dispositif industriel (40) ;
- envoyer le code d'accès (50) au système d'accès (30) ;
- recevoir, en provenance du système d'accès (30), l'accès au dispositif industriel (40).

5. Système d'accès (30) configuré pour
- recevoir, en provenance d'un dispositif utilisateur (20), une demande d'accès à un dispositif industriel (40) ;
- générer un code d'accès (50), le code d'accès étant un nombre aléatoire d'une longueur prédéfinie ;
- envoyer le code d'accès (50) au dispositif industriel (40) ;
- recevoir, en provenance du dispositif utilisateur (20), le code d'accès (50), qui a été envoyé via une technique de communication locale (45) par le dispositif industriel (40) au dispositif utilisateur (20), la technique de communication locale (45) comprenant au moins l'une de :
une communication via un contact électrique, une technique de communication acoustique, une technique de communication acoustique, une technique électrique et/ou électromagnétique en champ proche, une technique de communication électrique à courte portée entre le dispositif utilisateur (20) et le dispositif industriel (40), et/ou une technique sans fil combinée à une technique de localisation pour le dispositif utilisateur (20) ainsi que pour le dispositif industriel (40) ;
- autoriser l'accès au dispositif industriel (40) par le système d'accès (30), lorsque le code d'accès (50) est essentiellement identique au code d'accès (50) généré par le système d'accès (30), essentiellement identique au code d'accès (50) signifiant le même code d'accès ou comprenant des variations causées par des mécanismes de chiffrement et/ou de redondance.

6. Système de communication (10), comprenant un dispositif utilisateur (20) selon la revendication 4, un système d'accès (30) selon la revendication 5, et un dispositif industriel (40), le système de communication (10) étant configuré pour exécuter un procédé selon l'une quelconque des revendications 1 à 3,
le dispositif industriel (40) étant configuré pour :
- recevoir un code d'accès (50), généré par le système d'accès (30), en provenance du système d'accès (30), le code d'accès étant un nombre aléatoire d'une longueur prédéfinie ; et
- envoyer le code d'accès (50) au dispositif utilisateur (20), via une technique de communication locale (45).
